# EUROPÄISCHE PATENTANMELDUNG

(11) **EP 2 562 459 A1**
(43) Veröffentlichungstag der Anmeldung: **27.02.2013**
(21) Anmeldenummer: 12005612.2
(22) Anmeldetag: 02.08.2012
(51) Int. Cl.: F16L 55/035

(54) **Rohrhalterung**

(30) Priorität: 26.08.2011 DE 102011111717
(71) Anmelder: Sikla Holding GmbH, 4614 Marchtrenk (AT)
(72) Erfinder: Warkus, Clemens, 78628 Rottweil (DE)
(74) Vertreter: Maucher, Wolfgang

(57) **Zusammenfassung**

Die Erfindung betrifft eine Rohrhalterung (1), die ein Rohr in Umfangsrichtung umschließt und die dazu zumindest einen Schellenbügel (3) hat, dessen Bügelenden (4, 5) mittels eines weiteren Schellenbügels oder mittels eines Verbindungsstabes (6) verbindbar sind und mit wenigstens einer Rohrzwischenlage (13), die an dem wenigstens einen Schellenbügel (3) und/oder an dem Verbindungsstab (6) gehalten und zwischen diesem und dem Rohr vorgesehen ist, wobei an der Rohrzwischenlage (13) dazu Vorsprünge (14, 15) vorgesehen sind, welche die gegenüberliegenden Umfangs- oder Längsränder des zumindest einen Schellenbügels (3) und/oder des Verbindungsstabes (6) um- oder hintergreifen. Für die erfindungsgemäße Rohrhalterung (1) ist kennzeichnend, dass die Rohrzwischenlage (13) zumindest ein Lagerstück (16) hat, an dessen Lagerstück-Endbereichen die die gegenüberliegenden Umfangs- oder Längsränder um- oder hintergreifenden Vorsprünge (14, 15) vorgesehen sind, und dass zwischen den Vorsprüngen (15) zumindest eines Lagerstücks (16) mindestens ein Zapfen (17) vorsteht, der in ein ihm zugeordnetes Loch an dem zumindest einen Schellenbügel (3) oder am Verbindungsstab (6) eingreift (vgl. Fig. 1).

## Beschreibung

Die Erfindung betrifft eine Rohrhalterung, die ein Rohr in Umfangsrichtung umschließt und die dazu zumindest einen Schellenbügel hat, dessen Bügelenden mittels eines weiteren Schellenbügels oder mittels eines Verbindungsstabes verbindbar sind, und mit wenigstens einer Rohrzwischenlage, die an dem wenigstens einen Schellenbügel und/oder an dem Verbindungsstab gehalten und zwischen diesem und dem Rohr vorgesehen ist, wobei an der Rohrzwischenlage dazu Vorsprünge vorgesehen sind, welche die gegenüberliegenden Umfangs- oder Längsränder des zumindest einen Schellenbügels und/oder des Verbindungsstabes um- oder hintergreifen.

Aus der DE 10 2009 000 865 A1 ist bereits eine Rohrhalterung der eingangs erwähnten Art bekannt, die zur hängenden Montage einer Rohrleitung bestimmt ist, wie sie in Chemieanlagen, auf Rohrbrücken, in Tanklagern usw. verwendet wird. Die vorbekannte Rohrhalterung weist einen etwa U-förmigen Schellenbügel auf, dessen Bügelenden mittels eines Verbindungsstabes derart verbunden werden können, dass die Rohrhalterung das Rohr in Umfangsrichtung zu umschließen vermag. Da Rohrleitungen eine gewisse Eigenbewegung beispielsweise durch Temperaturschwankungen oder Vibrationen erleiden, besteht die Gefahr, dass an den punktuellen Auflagestellen der Korrosionsschutz und teilweise auch das Rohrmaterial beschädigt werden. Für die vorbekannte Rohrhalterung ist deshalb auch zumindest eine Rohrzwischenlage vorgesehen, die an dem Schellenbügel gehalten und zwischen diesem sowie dem Rohr vorgesehen ist. Dabei sind die Längsränder dieser schützenden Rohrzwischenlage etwa U-förmig abgewinkelt, so dass sich Vorsprünge bilden, welche die gegenüberliegenden Umfangs- oder Längsränder des Schellenbügels um- oder hintergreifen. Die Rohrzwischenlage der vorbekannten Rohrhalterung ist beispielsweise aus Polyethylen oder Teflon und somit aus vergleichsweise wenig elastischen Materialien hergestellt. Es besteht die Gefahr, dass die Rohrzwischenlage mit der Zeit in Folge der Rohrbewegungen aus der Rohrhalterung herausgedrückt oder herausgearbeitet wird. Da die Rohrzwischenlage nahezu die gesamte Längserstreckung des Verbindungsstabes oder des Schellenbügels zu überdecken hat, ist der Materialaufwand vergleichsweise hoch.

Es besteht daher insbesondere die Aufgabe, eine Rohrhalterung der eingangs erwähnten Art zu schaffen, die sich in den verschiedensten Einbaulagen durch einen dauerhaften Halt ihrer Rohrzwischenlage auszeichnet und die dennoch mit vergleichsweise geringem Aufwand herstellbar ist.

Die erfindungsgemäße Lösung dieser Aufgabe besteht insbesondere darin, dass die Rohrzwischenlage zumindest ein Lagerstück hat, an dessen Lagerstück-Endbereichen die die gegenüberliegenden Umfangs- oder Längsränder um- oder hintergreifenden Vorsprünge vorgesehen sind, und dass zwischen den Vorsprüngen zumindest eines Lagerstücks mindestens ein Zapfen vorsteht, der in ein ihm zugeordnetes Loch an dem zumindest einen Schellenbügel oder am Verbindungsstab vorsteht.

Die erfindungsgemäße Rohrhalterung, die beispielsweise zur Montage von Rohrleitungen in Chemieanlagen, auf Rohrbrücken, in Tanklagern etc. eingesetzt werden kann, weist eine Rohrzwischenlage auf, die zumindest ein Lagerstück hat, an dessen Lagerstück-Endbereichen die die gegenüberliegenden Umfangs- oder Längsränder des zumindest einen Schellenbügels oder des Verbindungsstabes um- oder hintergreifenden Vorsprünge vorgesehen sind. Durch die Verwendung erforderlichenfalls auch mehrerer Lagerstücke kann die Rohrzwischenlage mit der notwendigen Länge bereitgestellt werden, um den zumindest einen Schellenbügel oder den Verbindungsstab über seine gesamte Längserstreckung oder nur über einen Teilbereich schützend zu überdecken. Da die Rohrzwischenlage durch zumindest ein Lagerstück gebildet ist, ist praktisch ein modularer oder segmentweiser Aufbau der Rohrzwischenlage möglich. Da die Länge der Rohrzwischenlage auf einfache Weise variiert werden kann, ist eine nicht unwesentliche Reduzierung des Herstellungsaufwandes möglich. Zwischen den Vorsprüngen des zumindest einen Lagerstückes ist erfindungsgemäß mindestens ein Zapfen vorgesehen, der in ein ihm zugeordnetes Loch an dem zumindest einen Schellenbügel oder am Verbindungsstab vorsteht. Da dieser Zapfen auch mit der Zeit nicht flachgedrückt oder aus dem Loch herausgearbeitet werden kann, sondern eher noch tiefer in das Loch eingepresst wird, wird ein dauerhafter Halt der Rohrzwischenlage an der erfindungsgemäßen Rohrhalterung gewährleistet.

Das Loch kann als Sackloch oder vorzugsweise auch einfach als Durchsteckloch ausgebildet sein.

Ein anderer Erfindungsvorschlag zur Lösung der oben gestellten Aufgabe, der zusätzlich oder stattdessen zu der in Anspruch 1 beschriebenen Erfindung realisierbar ist, sieht vor, dass die Rohrzwischenlage zumindest zwei Lagerstücke hat, die über ein Filmscharnier gelenkig miteinander verbunden sind.

Die erfindungsgemäße Rohrhalterung hat hier also eine Rohrzwischenlage, die aus zumindest zwei Lagerstücken besteht, welche über ein Filmscharnier gelenkig miteinander verbunden sind. Durch die segmentierte oder stückweise Ausgestaltung der Rohrzwischenlage vermag sich diese selbst dann gut an die Krümmung eines Schellenbügels anzupassen, wenn die Rohrzwischenlage aus einem vergleichsweise harten belastbaren Material hergestellt ist. Da die zumindest zwei Lagerstücke über ein Filmscharnier gelenkig miteinander verbunden sind, lässt sich die Rohrzwischenlage dennoch mit vergleichsweise geringem Aufwand einstückig herstellen.

Damit die Rohrzwischenlage den zumindest einen Schellenbügel oder den Verbindungsstab schützend überdecken kann und dennoch sich gut an die Krümmung des Schellenbügels anzupassen vermag, ist es zweckmäßig, wenn das zumindest eine Lagerstück eine in Rohr-Durchsteckrichtung der Rohrhalterung orientierte Längserstreckung hat und vorzugsweise stab- oder stegförmig ausgebildet ist.

Eine bevorzugte Ausführungsform gemäß der Erfindung sieht vor, dass jede Rohrzwischenlage einen Zapfen aufweist und dass der Zapfen vorzugsweise an dem mittleren Lagerstück einer ungeraden Anzahl von Lagerstücken vorgesehen ist. Dabei erscheint ein Zapfen an jeder Rohrzwischenlage ausreichend, um die betreffende Rohrzwischenlage sicher und fest in ihrer Lage an der Rohrhalterung zu fixieren.

Um den sicheren Halt der Rohrzwischenlage in jeder Einbaulage der Rohrhalterung zu gewährleisten, ist es zweckmäßig, wenn mindestens ein Zapfen als ein an dem ihm zugeordneten Loch verrastbarer Rastzapfen ausgebildet ist.

Die Rohrzwischenlage lässt sich auf einfache Weise sicher in dem zugeordneten Loch der Rohrhalterung verankern, wenn der mindestens eine Rastzapfen wenigstens zwei federelastisch zueinander einlenkbare Federarme hat und wenn an dem freien Armende wenigstens eines Federarmes ein die zugeordnete Durchstecköffnung hintergreifender Rastvorsprung vorgesehen ist.

Um den sicheren und festen Halt der Rohrzwischenlage an der Rohrhalterung noch zusätzlich zu begünstigen, sieht eine bevorzugte Ausführungsform gemäß der Erfindung vor, dass die Vorsprünge zumindest eines Lagerstückes als Rastvorsprünge ausgebildet sind, deren freies Ende als Rasthaken ausgestaltet ist.

Um die Rohrzwischenlage auch am gekrümmten Teilbereich des Schellenbügels sicher und fest fixieren zu können, ist es vorteilhaft, wenn die Vorsprünge eines jeden zweiten Lagerstücks einer Rohrzwischenlage als Rastvorsprünge ausgestaltet sind.

Eine bevorzugte Ausführungsform gemäß der Erfindung sieht vor, dass wenigstens eine Rohrzwischenlage aus Polyamid hergestellt ist. Eine aus Polyamid hergestellte Rohrzwischenlage zeichnet sich durch eine hohe Belastbarkeit des verwendeten Materials aus.

Weiterbildungen gemäß der Erfindung ergeben sich aus den Ansprüchen in Verbindung mit der Beschreibung und der Zeichnung. Nachstehend wird die Erfindung anhand bevorzugter Ausführungsbeispiele noch näher beschrieben.

Es zeigt:
- Fig. 1: eine im Zwischenraum zwischen zwei U-Profilen verankerte Rohrhalterung in einer perspektivischen Ansicht, welche Rohrhalterung einen etwa U-förmigen Schellenbügel aufweist, dessen Bügelenden über einen Verbindungsstab miteinander verbunden sind, wobei an dem Schellenbügel und dem Verbindungsstab Rohrzwischenlagen vorgesehen sind, die schützend zwischen der Rohrhalterung und einem hier nicht weiter dargestellten, von der Rohrhalterung umgriffenen Rohr angeordnet sind,
- Fig. 2: eine mit Fig. 1 vergleichbar ausgestaltete Rohrhalterung in einer perspektivischen Ansicht, welche Rohrhalterung hier jedoch für einen wesentlich kleineren Rohrdurchmesser vorgesehen ist,
- Fig. 3: eine der Rohrzwischenlagen der in den Fig. 1 und 2 gezeigten Rohrhalterungen in einer perspektivischen Unteransicht,
- Fig. 4: die Rohrzwischenlage aus Fig. 3 in einer Seitenansicht, und
- Fig. 5: eine der an der Rohrhalterung gemäß Fig. 2 verwendeten Rohrzwischenlagen.

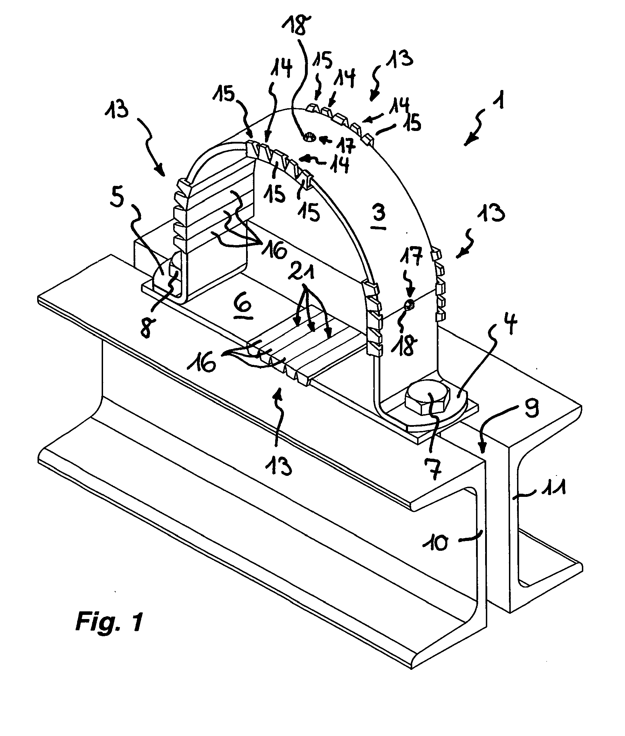

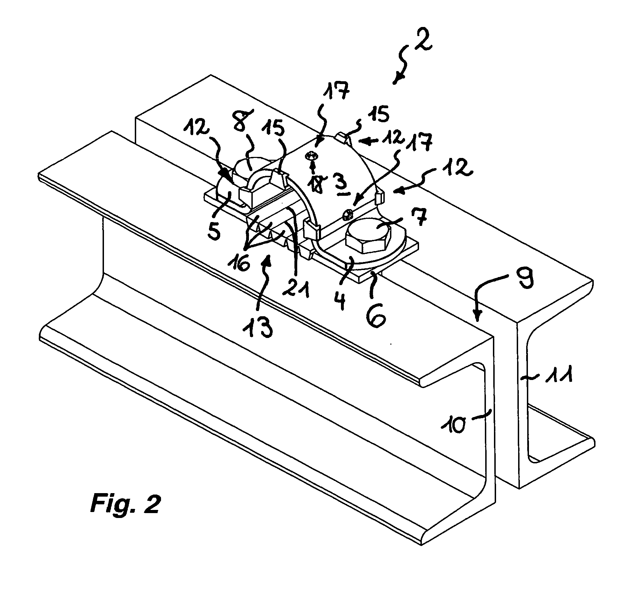

In den Fig. 1 und 2 ist eine Rohrhalterung in zwei Ausführungen 1, 2 dargestellt, die als Gleit-, Festpunkt- oder seitenbewegliche Halterung zur Montage einer Rohrleitung in hängender, stehender oder vertikaler Einbaulage bestimmt ist. Die Rohrhalterung 1, 2, welche die hier nicht weiter dargestellte Rohrleitung in Umfangsrichtung zu umschließen hat, weist einen etwa U-förmigen Schellenbügel 3 auf, dessen hier nach außen abgewinkelten Bügelenden 4, 5 mittels eines Verbindungsstabes 6 verbunden sind. Dabei werden die Bügelenden 4, 5 des Schellenbügels 3 und der Verbindungsstab 6 über Spannschrauben 7, 8 miteinander verbunden, die gleichzeitig durch den Zwischenraum 9 zwischen zwei U-Profilen 10, 11 hindurchgeführt und auch auf der der Rohrhalterung 1, 2 abgewandten Seite der U-Profile 10, 11 gehalten sind.

Da Rohrleitungen eine gewisse Eigenbewegung beispielsweise durch Temperaturschwankungen oder Vibrationen erleiden, besteht grundsätzlich die Gefahr, dass an den punktuellen Auflagestellen der Korrosionsschutz und teilweise auch das Rohrmaterial beschädigt wird. Um Beschädigungen zwischen der Rohrhalterung 1, 2 und dem von ihr umgriffenen Rohr zu vermeiden, sind an den Rohrhalterungen 1, 2 mehrere Rohrzwischenlagen 12, 13 vorgesehen. Diese Rohrzwischenlagen 12, 13 weisen Vorsprünge 14, 15 auf, welche die gegenüberliegenden Umfangs- oder Längsränder des Schellenbügels 3 oder des Verbindungsstabes 6 um- oder hintergreifen. Jede Rohrzwischenlage 12, 13 weist zumindest ein Lagerstück 16 auf, an dessen Lagerstück-Endbereichen die Vorsprünge 14, 15 vorgesehen sind. Zwischen den Vorsprüngen 14, 15 zumindest eines Lagerstücks 16 steht mindestens ein Zapfen 17 vor, der in ein ihm zugeordnetes Loch 18 an dem Schellenbügel 3 oder an dem Verbindungsstab 6 vorsteht.

Das zumindest eine Lagerstück 16 der Rohrzwischenlagen 12, 13 weist eine in Rohr-Durchsteckrichtung der Rohrhalterung 1, 2 orientierte Längserstreckung auf und ist stab- oder stegförmig ausgebildet. Der an zumindest einem Lagerstück 16 vorstehende Zapfen 17 ist als ein an dem ihm zugeordneten Loch 18 verrastbarer Rastzapfen 17 ausgebildet.

Der Zapfen 17 hat dazu zumindest zwei federelastisch zueinander einlenkbare Federarme 19. An dem freien Armende wenigstens eines Federarmes 19 ist ein das zugeordnete Loch 18 hintergreifender Rastvorsprung 20 vorgesehen.

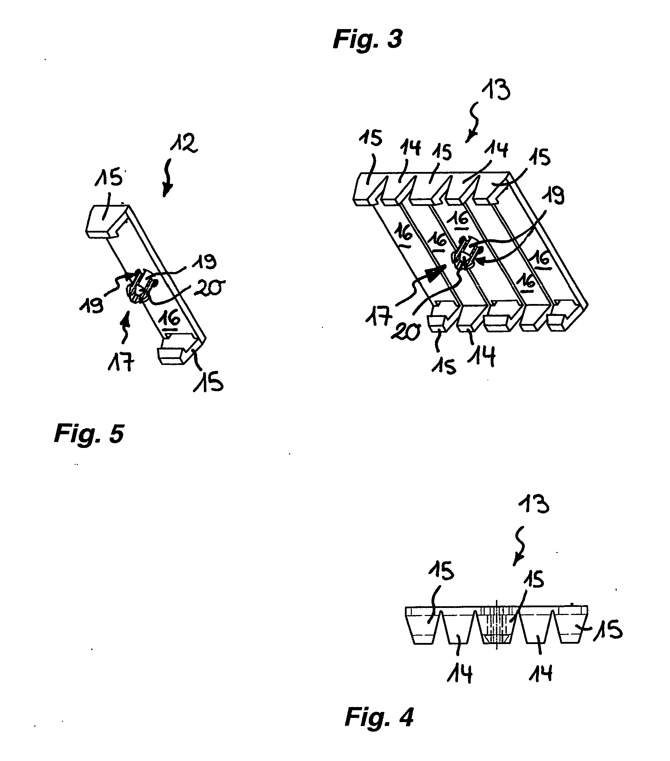

Während die Rohrzwischenlage 12 gemäß den Fig. 2 und 5 lediglich aus einem Lagerstück 16 gebildet ist, weist die Rohrzwischenlage 13 gemäß den Fig. 1 bis 4 mehrere und vorzugsweise eine ungerade Anzahl von Lagerstücken 16 auf, die über ein Filmscharnier 21 gelenkig miteinander verbunden sind. Dabei ist der auch an der Rohrzwischenlage 13 vorgesehene Zapfen 17 an dem mittleren Lagerstück 16 vorgesehen.

Aus einem Vergleich der Fig. 3 und 5 wird deutlich, dass die Vorsprünge 15 zumindest eines Lagerstückes 16 als Rastvorsprünge ausgebildet sind, deren freies Ende als Rasthaken ausgestaltet ist. Bei der aus mehreren Lagerstücken 16 gebildeten Rohrzwischenlage 13 sind die Vorsprünge eines jeden zweiten Lagerstücks 16 als Rastvorsprünge 15 ausgebildet.

Die Rohrzwischenlagen 12, 13 sind aus einem gleitfähigen und gleichzeitig widerstandsfähigen Material, vorzugsweise aus Polyamid, hergestellt. Der an einzelnen Lagerstücken 16 vorstehende Zapfen 17 dient vor allem der Positionierung der Rohrzwischenlage 12, 13 auf dem Schellenbügel 3 oder dem Verbindungsstab 6 der Rohrhalterung 1, 2. Dabei wird ein tangentiales Verschieben der Rohrzwischenlage 12, 13 selbst dann vermieden, falls das Rohr bei der Montage gedreht werden muss. In Einbausituationen, in denen der vorzugsweise als Flachstahlteil hergestellte Verbindungsstab 6 auf den Profilen aufliegt, kann der Zapfen 17 die Rohrzwischenlage 12, 13 immer noch sicher und fest an der Rohrhalterung 1, 2 fixieren, obwohl die Rastvorsprünge 15 den Verbindungsstab 6 nicht mehr hintergreifen können. Aus einem Vergleich der Fig. 1 und 2 wird deutlich, dass eine aus einem Lagerstück 16 bestehende Rohrzwischenlage 12 insbesondere bei solchen Rohrhalterungen 2 vorteilhaft eingesetzt werden kann, die für kleinere Durchmesser bestimmt sind. Da die Rohrhalterung 1 demgegenüber für größere Rohrdurchmesser ausgelegt ist, bestehen die verwendeten Rohrzwischenlagen 13 vorzugsweise aus mehreren, gelenkig miteinander verbundenen Lagerstücken 16. Dank der Segmentierung der Rohrhalterung 1 in mehrere, über Filmscharniere 21 gelenkig verbundene Lagerstücke 16 kann sich die Rohrzwischenlage 1 an unterschiedliche Krümmungen des Schellenbügels 3 anpassen, so dass nur ein Typ von Rohrzwischenlage 13 benötigt wird, um bei einem großen Bereich von Rohrdurchmessern vorteilhaft verwendet werden zu können.

### Bezugszeichenliste

- Rohrhalterung (gemäß Fig. 1): 1
- Rohrhalterung (gemäß Fig. 2): 2
- Schellenbügel: 3
- (erstes) Bügelende (des Schellenbügels 3): 4
- (zweites) Bügelende (des Schellenbügels 3): 5
- Verbindungsstab: 6
- Spannschraube (am Bügelende 4): 7
- Spannschraube (am Bügelende 5): 8
- Zwischenraum (zwischen den U-Profilen 10, 11): 9
- (erstes) U-Profil: 10
- (zweites) U-Profil: 11
- Rohrzwischenlage (gemäß den Fig. 2 und 5): 12
- Rohrzwischenlage (gemäß den Fig. 1 bis 4): 13
- Vorsprung (an der Rohrzwischenlage 13): 14
- (Rast-) Vorsprung (an den Rohrzwischenlagen 12, 13): 15
- Lagerstück (an den Rohrzwischenlagen 12, 13): 16
- Zapfen (an den Rohrzwischenlagen 12, 13): 17
- Loch (für den Zapfen 17): 18
- Federarm (des Zapfens 17): 19
- Rastvorsprung (am Federarm 19): 20
- Filmscharnier (zwischen den Lagerstücken 16): 21

## Patentansprüche

1. Rohrhalterung (1, 2), die ein Rohr in Umfangsrichtung umschließt und die dazu zumindest einen Schellenbügel (3) hat, dessen Bügelenden (4, 5) mittels eines weiteren Schellenbügels oder mittels eines Verbindungsstabes (6) verbindbar sind, und mit wenigstens einer Rohrzwischenlage (12, 13), die an dem wenigstens einen Schellenbügel (3) und/oder an dem Verbindungsstab (6) gehalten und zwischen diesem und dem Rohr vorgesehen ist, wobei an der Rohrzwischenlage (12, 13) dazu Vorsprünge (14, 15) vorgesehen sind, welche die gegenüberliegenden Umfangs- oder Längsränder des zumindest einen Schellenbügels (3) und/oder des Verbindungsstabes (6) um- oder hintergreifen, **dadurch gekennzeichnet, dass** die Rohrzwischenlage (12, 13) zumindest ein Lagerstück (16) hat, an dessen Lagerstück-Endbereichen die die gegenüberliegenden Umfangs- oder Längsränder um- oder hintergreifenden Vorsprünge (14, 15) vorgesehen sind, und dass zwischen den Vorsprüngen (14, 15) zumindest eines Lagerstücks (16) mindestens ein Zapfen (17) vorsteht, der in ein ihm zugeordnetes Loch (18) an dem zumindest einen Schellenbügel (3) oder am Verbindungsstab (6) eingreift.

2. Rohrhalterung nach dem Oberbegriff von Anspruch 1, insbesondere nach Anspruch 1, **dadurch gekennzeichnet, dass** die Rohrzwischenlage (13) zumindest zwei Lagerstücke (16) hat, die über ein Filmscharnier (21) gelenkig miteinander verbunden sind.

3. Rohrhalterung nach Anspruch 1 oder 2, **dadurch gekennzeichnet, dass** das zumindest eine Lagerstück (16) eine in Rohr-Durchsteckrichtung der Rohrhalterung (1, 2) orientierte Längserstreckung hat und vorzugsweise stab- oder stegförmig ausgebildet ist.

4. Rohrhalterung nach einem der Ansprüche 1 bis 3, **dadurch gekennzeichnet, dass** jede Rohrzwischenlage (12, 13) einen Zapfen (17) aufweist und dass der Zapfen (17) vorzugsweise an dem mittleren Lagerstück (16) einer ungeraden Anzahl von Lagerstücken (16) vorgesehen ist.

5. Rohrhalterung nach einem der Ansprüche 1 bis 4, **dadurch gekennzeichnet, dass** mindestens ein Zapfen (17) als ein an dem ihm zugeordneten Loch (18) verrastbarer Rastzapfen ausgebildet ist.

6. Rohrhalterung nach einem der Ansprüche 1 bis 5, **dadurch gekennzeichnet, dass** der mindestens eine Rastzapfen (17) wenigstens zwei federelastisch zueinander einlenkbare Federarme (19) hat, und dass an dem freien Armende wenigstens eines Federarmes (19) ein das zugeordnete Loch hintergreifender Vorsprung (20) vorgesehen ist.

7. Rohrhalterung nach einem der Ansprüche 1 bis 6, **dadurch gekennzeichnet, dass** die Vorsprünge (15) zumindest eines Lagerstücks (16) als Rastvorsprünge ausgebildet sind, deren freies Ende als Rasthaken ausgestaltet ist.

8. Rohrhalterung nach einem der Ansprüche 1 bis 7, **dadurch gekennzeichnet, dass** die Vorsprünge (15) eines jeden zweiten Lagerstücks (16) einer Rohrzwischenlage (13) als Rastvorsprünge ausgestaltet sind.

9. Rohrhalterung nach einem der Ansprüche 1 bis 8, **dadurch gekennzeichnet, dass** wenigstens eine Rohrzwischenlage (13) aus Polyamid hergestellt ist.
